# EUROPEAN PATENT APPLICATION

(11) **EP 4 657 391 A1**
(43) Date of publication of application: **03.12.2025**
(21) Application number: 25178017.7
(22) Date of filing: 21.05.2025
(51) Int. Cl.: G06V 20/10, G06T 7/00, G06V 20/56, G06V 20/64

(54) **A METHOD AND SYSTEM FOR IDENTIFYING PLANT LOCATIONS**

(30) Priority: 30.05.2024 GB 202407982
(71) Applicant: AGCO International GmbH, 8212 Neuhausen am Rheinfall (CH)
(72) Inventor: Blume, Tobias, 87616 Marktoberdorf (DE); Alsina, Asun, Barcelona (ES); Pladevall, Jaume, Barcelona (ES); Floeser, Stefan, Frankfurt am Main (DE)
(74) Representative: AGCO Intellectual Property Department

(57) **Abstract**

According to a method of identifying plant locations within a terrain, a 3D point cloud (600) is received representing those points, in a 3D volume extending above the terrain, where solid matter is present. Regions of a reference plane of said 3D volume are identified for which solid matter aligned in a height direction with said reference plane region meets a first, height, condition. Volumes extending in the height direction relative to those identified regions are defined and volumes which meet a second, point distribution, condition are identified as extending above the plant locations.

## Description

### FIELD

The present disclosure relates generally to a system and method for identifying plant locations.

### BACKGROUND

There is an increasing amount of automation in agriculture. In order to perform ground processing operations in a terrain with (tall) crop plants, it is often necessary to direct the processing machinery along paths that avoid collision with the plants. For this purpose, it is necessary to use image analysis to identify the locations of the plants.

One example is processing a vineyard terrain. The vines are arranged in rows, and the rows can be identified by locating the vines. Typically, the row spacing is sized to allow a tractor to drive between the rows. However, the individual plant locations would also need to be identified for processing (e.g. weeding) the terrain between the individual plants along the rows in an automated way.

There are of course many other applications where an identification of plant locations can be used to provide assistance or automation to an operator when processing the terrain on which the plants are present, such as spraying the vines for example.

Identifying plant locations from image analysis is challenging, for example because the plant canopy can mask the location of the plant stem/trunk.

There is therefore a need for an improved way to identify plant locations, in particular in a way that avoids the need for significant image processing complexity.

### BRIEF SUMMARY

According to an aspect of this disclosure there is provided a method of identifying plant locations within a terrain, comprising:
receiving a 3D point cloud representing those points, in a 3D volume extending above the terrain, where solid matter is present;
identifying those regions of a reference plane of said 3D volume for which solid matter aligned in a height direction with said reference plane region meets a first, height, condition;
defining a volume for each identified region, the volume extending to the maximum height at which a point of the point cloud is present above said identified region;
identifying those volumes which meet a second, point distribution, condition; and
outputting an identification of the reference plane regions of the identified volumes as plant locations.

This method identifies plant locations based on the plants meeting a height condition (for example being taller than a threshold) and also a distribution condition (for example a vertical plant stem is present substantially all the way up the plant height). In this way, a simple processing method is provided for processing a point cloud to identify where plants are located. This information may be used to present information to a driver, or it may be used to generate steering guidance for a weeding or other terrain processing machine, or it may be used as an input to an automatic steering system.

By way of example, the plant locations may be used to guide any implement such as a robotic weeding or cutting machine or other ground processing machine between the plants, or it may be used to control actuation of a weeding or cutting or other processing attachment for example carried by a tractor. The plant locations may be used to guide a robotic or fully automated spraying system to spray the vines without colliding against the plants. The tractor for example also carries an imaging unit that performs the method.

The 3D point cloud is for example received from an imaging unit mounted on an agricultural machine and the method comprises:
defining said reference plane as a reference plane which is fixed relative to a coordinate system of the agricultural machine; and
dividing the reference plane into a grid of said regions.

By using a reference plane relative to the coordinate system of the agricultural machine (e.g. tractor or implement towed by the tractor), the system can function on any terrain, and is for example able to perform well on hilly terrain. The regions may be square, but they could equally be other shapes than can be tessellated (triangles or hexagons). The grid may be regular, but this is not essential.

The first, height, condition is that the distance between the lowest and highest points at which solid matter is present exceeds a height threshold.

The lowest point may be below the reference plane (so a negative height) and the highest point is typically above the reference plane. The distance between these points corresponds to the height of a plant, without needing to map the contour of the terrain. Instead, the ground level is simply the lowest point at which solid matter is present, and this may be a negative height from the reference plane.

The defined volume for each identified region for example extends from a minimum height at which a point of the point cloud is present to the maximum height at which a point of the point cloud is present.

The defined volume thus encapsulates the full height of the volume in which solid matter (i.e. a plant) is identified.
Identifying those volumes which meet a second, point distribution, condition may comprise:
determining at least one point density within each volume; and
identifying the volumes for which the at least one point density meet a point density criterion.
In this way, a plant location is identified as present based on one or more measures of plant density within the volume.

For example, multiple point densities are determined within each volume. In this way, an assessment of the point distribution throughout the volume can be made. For example, identifying those volumes which meet a second, point distribution, condition for example may comprise:
dividing each volume into a set of segments in the height direction;
determining a point density within each segment; and
identifying the volumes for which every segment meets a minimum point density threshold.

In this way, a plant location is identified as present if there is solid matter (i.e. plant material) substantially the full height of the volume, in particular with at least a minimum point density at each of a series of regions up the volume. Thus, the locations at which only overhanging branches are present do not result in the identification of plant locations. The segments for an individual volume may all have the same size. For example, each volume may be divided into a fixed number of segments.

The method may comprise using a Lidar sensor mounted on an agricultural machine to produce the 3D point cloud and performing position tracking of the agricultural machine using a position determination unit. The position tracking of the agricultural machine enables the location of the plants to be identified both relative to the machine and in real space so that a separate vehicle may be controlled using the plant location information.

The method may comprise:
identifying rows of plant locations; and
determining a path between the rows of plant locations.

When a grid of plant locations is identified, the rows (along which a tractor may drive) may be distinguished from the columns (which may be blocked by support wires or trained branches) by different spacings between rows and columns, or indeed by recognizing trained plant density in the row direction. The rows of plant locations for example comprise rows of vines.

The method may comprise:
determining mid points between plant locations of adjacent rows of plant locations; and
determining the path as a smoothed line derived from the midpoints.

The path can then be used for automated steering or simply for providing steering guidance.

The disclosure also provides a method of controlling a ground or plant processing machine, comprising:
identifying plant locations using the method defined above; and
using the identified plant locations to control, or assist the control of, the ground or plant processing machine.

The ground or plant processing machine may be a robotic weeding or cutting machine, or it may be an implement to an agricultural vehicle (wherein either the vehicle or the implement performs the plant location identification). The implement is for example deployed when the agricultural vehicle is located between plants, and the implement is retracted when the vehicle is located alongside plants. The agricultural vehicle and its implement may together be considered to comprise an agricultural machine. Thus, the use of the identified plant locations may be part of an automated ground processing function, or it may simply be used an an assistance to the control of the ground processing machine. In this way, the ground between plants along the row (rather than between the rows) can be processed, for example weeded.

This disclosure also provides a system for identifying plant locations within a terrain, comprising:
an imaging unit for generating a 3D point cloud representing those points in a 3D volume extending above the terrain where solid matter is present; and
a controller for processing the 3D point cloud, wherein the controller configured to:
   identify regions of a reference plane of said 3D volume for which solid matter matter aligned in a height direction with said reference plane region meets a first, height, condition;
   define a volume for each identified region extending to the maximum height at which a point of the point cloud is present above said identified region;
   identify those volumes which meet a second, point distribution, condition; and
   output an identification of the reference plane regions of the identified volumes as plant locations.

This system may be mounted on an agricultural machine to inspect terrain being processed, for example weeded.

The controller is for example further configured to:
define, as said reference plane, a reference plane which is fixed relative to a coordinate system of the agricultural machine; and
divide the reference plane into a grid of said regions.

The regions for example have a linear dimension of the order of tens of centimeters, such as 30 cm x 30 cm, for example a square between 20 cm x 20 cm and 50 cm x 50 cm.

The first height condition is for example that the height (e.g. vertical) distance between the lowest and highest points at which solid matter is present exceeds a height threshold.

The defined volume for each identified region for example extends from a minimum height at which a point of the point cloud is present to the maximum height at which a point of the point cloud is present. The controller may be configured to identify those volumes which meet a second, point distribution, condition by:
dividing each volume into a set of vertical segments of equal size;
determining a point density within each segment; and
identifying the volumes for which every segment meets a minimum point density threshold.

The imaging unit for example comprises a Lidar sensor mounted on an agricultural machine, and the system further comprises a position determination unit for position tracking of the agricultural machine.

As disclosed above, the controller is configured to execute different actions. Each method step of the method may correspond to an action that may be executable by the controller. The method may comprise one or more additional method steps wherein each method step may analogously correspond to an action disclosed above. Hence, each action for which the controller is configured to execute may be defined as a method step.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural machine.
FIG. 2 illustrates a schematic block diagram of an agricultural machine.
FIG. 3 illustrates a simplified view of a control unit.
FIG. 4 illustrates an imaging unit.
FIG. 5 illustrates a flow chart of a method executable by the control unit of FIG. 3.
FIG. 6 illustrates a 3D point cloud..
FIG. 7 illustrates a 3D point cloud.
FIG. 8 illustrates a 3D point cloud.
FIG. 9 illustrates a 3D point cloud.
FIG. 10 illustrates a 3D point cloud.
FIG. 11 illustrates a 3D point cloud.
FIG. 12 illustrates a 3D point cloud.
FIG. 13 illustrates identified plant locations of the 3D point cloud.
FIG. 14 illustrates a path generation between identified plant locations.

### DETAILED DESCRIPTION

This disclosure provides a method of identifying plant locations within a terrain. The method comprises receiving a 3D point cloud representing those points, in a 3D volume extending above the terrain, where solid matter is present. Regions of a reference plane of said 3D volume are identified for which solid matter aligned in a height direction with said reference plane region meets a first, height, condition. Volumes extending in the height direction relative to those identified regions are defined, and volumes which meet a second, point distribution, condition are identified as extending above the plant locations.

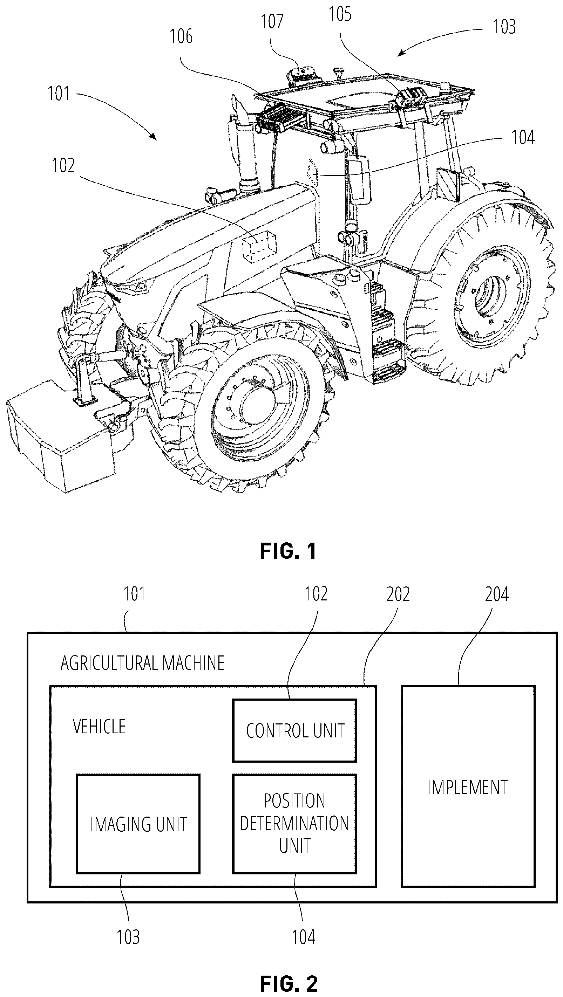

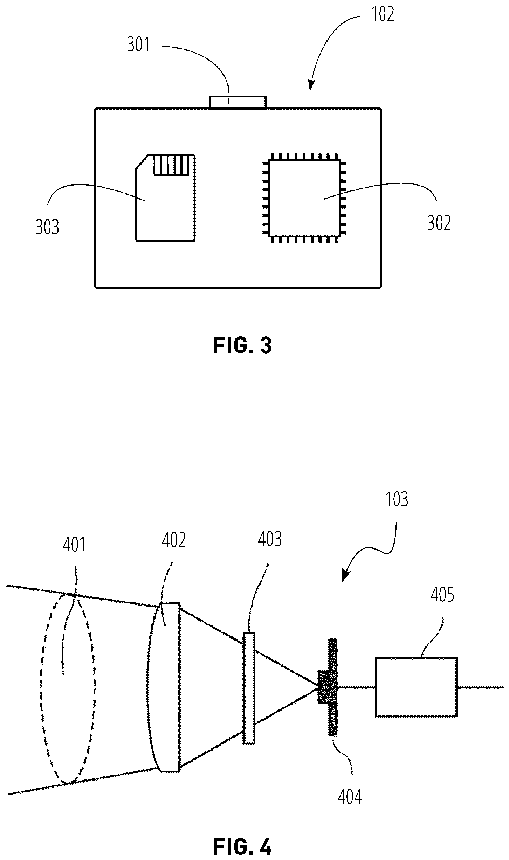

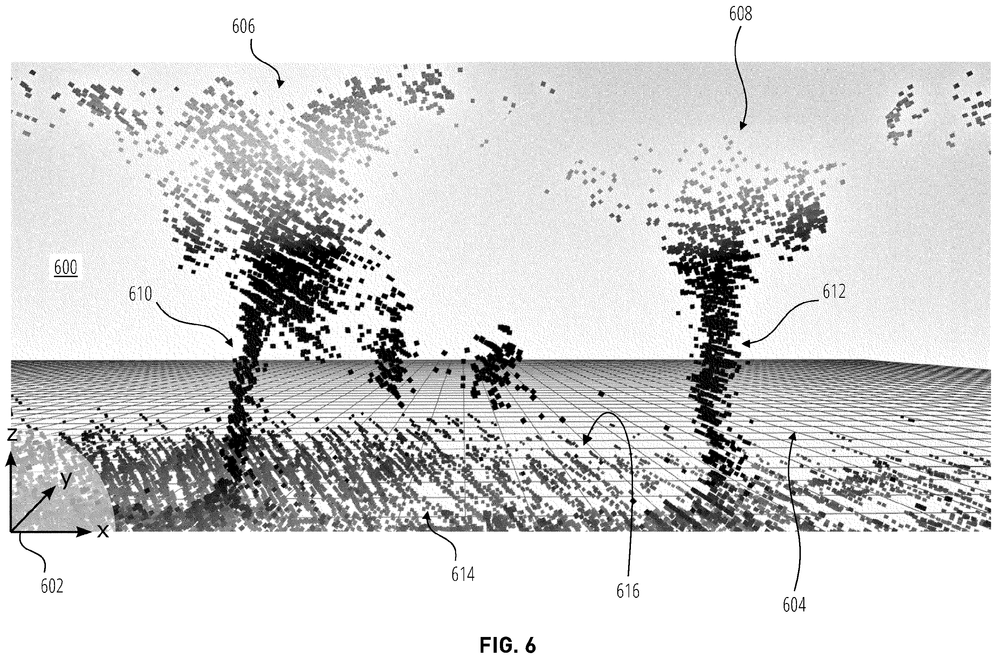

FIG. 1 shows an agricultural machine 101 comprising a control unit 102 as shown in FIG. 3, an imaging unit 103 and a position determination unit 104. The Imaging unit 103 comprises one or more sensors 105, 106 and 107 for generating a 3D point cloud 600 (see FIG. 6) of the environment, for example a LIDAR.

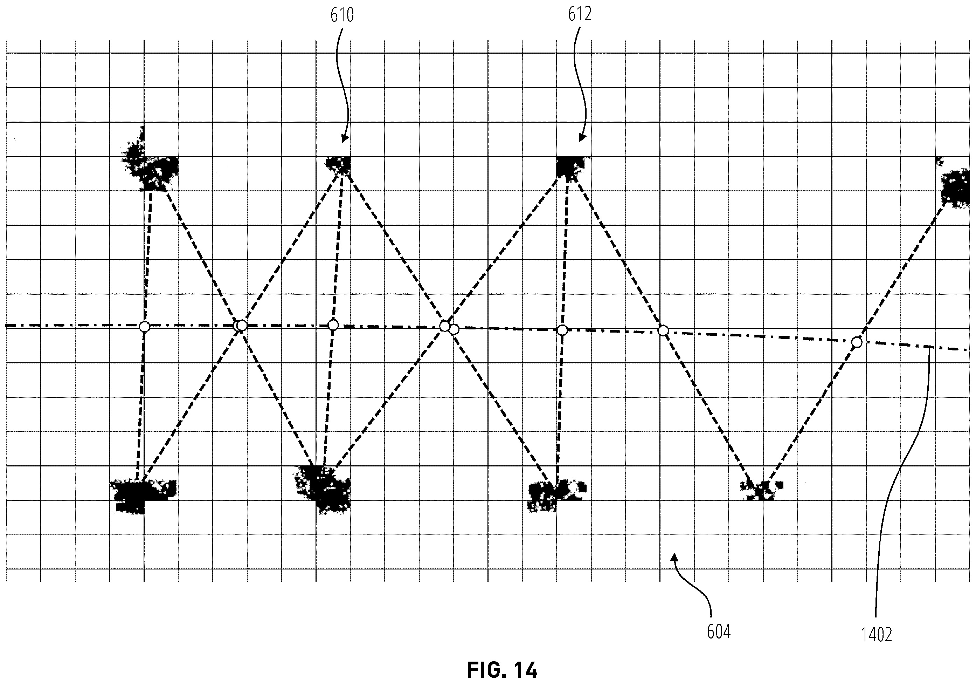

The position determination unit 104 provides position and time signals for determining an absolute position of the agricultural machine 101 at a specific point of time. The position determination unit 104 may be an inertial measurement unit (IMU) and/or a global navigation satellite system (GNSS) receiver receiving position and time signals from a GNSS such as GPS or Galileo. The IMU may provide additional orientation information about the orientation and movement of the agricultural machine 101 for improving the accuracy of the position estimation and the reference points of the GNSS receiver. Based on received position and time signals, the agricultural machine 101 can move autonomously along a travel path, for example a path 1402 as shown in Fig. 14.

FIG. 2 shows a simplified block diagram of an agricultural machine 101. The agricultural machine 101 may be a vehicle 202 or a vehicle-implement combination (202, 204). The vehicle 202 may generate a tractive force to tow the implement 204 through the agricultural field. The implement 204 may be fixed to the vehicle 202 or detachably connected with the vehicle 202. The vehicle 202 may be an agricultural vehicle such as a tractor, a harvester, a combine, a sprayer or of any other type such as a truck. The implement 204 may be used for an operation in the agricultural field and may be of the type of a plough, a rake, a planter, a sprayer, a mower, a trailer, etc. Thus, it may be used for ground processing or plant processing. Depending on the type of the implement 204, the implement 204 may comprise one or more tools such as a rake rotor, a mower knife, a seeding unit, a spray nozzle, a shovel, a dumper, etc.

The implement 204 of a vehicle-implement combination may be an independently working device. For example, it may be a self-driving robotic implement that uses information obtained by the vehicle 202, in particular plant location information obtained by the vehicle 202 as discussed further below.

FIG. 3 shows the control unit 102 comprising an I/O interface 301, a controller 302 and a memory 303. The I/O interface 301, the controller 302 and the memory 303 may be attached to a printed circuit board (PCB). The control unit 102 may receive and send signals or data via the I/O interface 301. The I/O interface 301 may be a wireless interface or a connector. The controller 302 may store the data or signals received by the control unit 102 in the memory 303. The memory 303 may contain additional data or executable computer program products, for example in terms of a computer-implemented method, that may be retrieved, processed or executed by the controller 302. Data or signals resulting from the processing of data or signals or from the execution of a computer program product may be stored to the memory 303 or sent to the I/O interface 301 by the controller 302.

FIG. 4 shows exemplarily one of the sensors of the imaging unit 103 such as sensor 105, sensor 106 or sensor 107. The sensor is configured to generate a 3D point cloud 600 and may be of the type of a LIDAR, a stereo camera or a time-of-flight (ToF) camera, for example. A ToF camera could provide depth information and improve accuracy of detection and pose estimation.

The sensor may comprise several components such as at least one optical lens 402, an optional filter 403, a detector 404 and a processing circuitry 405. The optical lens 402 may collect and direct light from a field of view 401 of the imaging unit 103 through the filter 403 to the detector 404 and serve to focus and/or magnify images. The at least one optical lens 402 may be of the type of a fisheye lens, a rectilinear lens or any other standard and moderate wide-angle lens. A fish-eye lens may be of the type of a F-theta lens, a F-tan lens, a tailored distortion lens or a fovea lens, for example. A standard lens is typically defined as a lens with a focal length being approximately equal to the diagonal of the detector 404. This results in a field of view 401 that is rather similar to what human eyes see. Moderate wide-angle lenses have shorter focal lengths than standard lenses, typically ranging from 24 mm to 35 mm for full-frame cameras. These lenses offer a wider field of view 401 than standard lenses and can capture more of the scene in the frame. The optional filter 403 passes selected spectral bands such as ultraviolet, infrared or other bands. The detector 404 converts electromagnetic energy to electric signals representing the 3D point cloud 600. The processing circuitry 405 may include a circuitry for amplifying and processing the electric signals generated by the detector 404 to generate image data, which is passed to the one or more computing devices such as the control unit 102.

The sensor may be moveable so that the pose (i.e., position and/or orientation) of the sensor may change. The movement may be determined by a corresponding sensor as for example a position sensor.

The sensor may receive position and time signals from the position determination unit 104 for geo-referencing and time stamping of each captured image. The data captured by the sensor is logged along with the position and time data gathered by position determination unit 104 allowing an accurate determination of the global position of objects contained in the captured images.

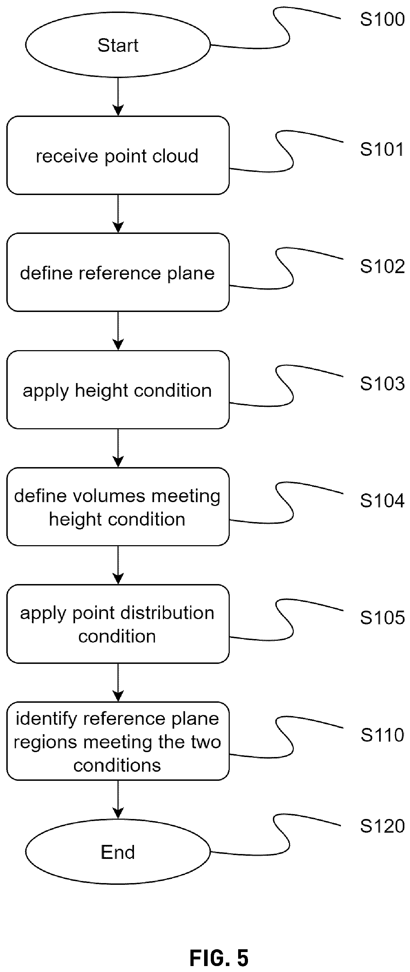

FIG. 5 shows a flow chart of a method for identifying plant locations within a terrain. The method may be at least partly a computer-implemented method stored as a computer program product in the memory 303 of the control unit 102. The control unit 102 is configured to carry out the method. Computer-implemented parts of the method may be executed by the controller 302 of the control unit 102. Non-computer-implemented parts of the method may be executed manually or by other components of the system. The method is described by way of example of several steps without any restriction in respect of these steps. I. e. the number or the order of steps may be adapted, for example single steps may be excluded and/or added and executed earlier or later than described. The method starts with step S100 and proceeds to step S101.

At step S101, the control unit 102 receives the 3D point cloud from the imaging unit 103. The point cloud represents those points, in a 3D volume extending above the terrain, where solid matter is present. In other words, the points in 3D space are identified at which plant material is present. It is noted the method described below for identifying plant locations will also identify other vertical objects such as telegraph poles. In the context of an automated steering system for collision avoidance (with plants) this provides an additional benefit that collisions can be avoided with other objects or indeed people.

At step S102 a reference plane is defined. This reference plane is fixed relative to a coordinate system 602 of the agricultural machine 101. Thus, the reference plane will follow the contour of the terrain in the same way that the agricultural machine 101 follows the local contour of the terrain. The reference plane is divided into a grid 604 of regions.

These regions represent areas of the reference plane which are to be tested for the presence of a plant (at ground level). They for example comprise a square of 30 cm x 30 cm, but other sizes and shapes are possible. Typically, each region is smaller than 1m².

In step S103, those regions of the reference plane are identified for which solid matter vertically aligned with said reference plane region meets a first, height, condition. The height condition is that the vertical distance between the lowest and highest points at which solid matter is present exceeds a height threshold. In other words, the plant material has a minimum height.

It is noted that the height axis is defined by the vehicle coordinate system. Thus, references to "vertical" and "vertical height" refer to a distance along the height axis of the vehicle coordinate system. The height axis will be generally vertical, but will not be strictly vertical e.g., when the vehicle is on a slope. The term "vertical" should be understood accordingly, and is used for ease of understanding.

This height condition can be set according to the known range of heights of the crop plants, to distinguish the crop plants from weeds or other vegetation.

At step 104, a volume is defined for each identified region (i.e., those regions with the required plant height). The volume extends vertically from the lowest height to the maximum height, at which a point of the point cloud is present vertically aligned with said identified region. This encapsulates the full volume in which plant material has been identified, even if some vertical heights are devoid of plant material.

At step 105, those volumes are identified which meet a second, point distribution, condition. This point distribution condition is used to identify plant stems or trunks, and hence the location at which the plant is present in the ground. The point distribution condition is a condition that there is an uninterrupted column of plant material aligned vertically with the identified region.

As explained below, this involves dividing each volume into a set of vertical segments (e.g. of equal size), determining a point density within each segment; and identifying the volumes for which every segment meets a minimum point density threshold. In this way, the plant stem or trunk is identified based on a minimum density of plant matter being present at multiple heights up the plant. This avoids overhanging branches resulting in the identification of false plant locations.

At step 110, an identification of the reference plane regions which meet the two conditions, and hence correspond to plant locations, is output. This plant location information can be used in various ways, as discussed below. The method ends at this step S110.

The method outlined briefly above will now be explained in more detail using images to represent the processing steps performed. Overall, the method involves preprocessing and filtering a 3D point cloud based on height, point count, and density criteria.

By way of example, the method may be used to recognize the stems of grapevines. The method basically finds vertical edges meeting a height criterion. The detection can also enable blurred edges or slightly angled edges to be identified depending on the size of the reference plane regions.

The plant location information may for example be used to create occupancy maps of drivable areas, to recognize tramlines when the plants have reached a certain size, detection of tree stems in an orchard etc.

FIG. 6 shows a 3D point cloud 600 captured over a terrain with two plants 606, 608. The controller 102 receives the 3D point cloud 600 from the imaging unit 103 (e. g. LIDAR sensors 105, 106, 107). Each point of the 3D point cloud 600 has a defined x-, y- and z-coordinate in the coordinate system 602.

The point cloud 600 represents any objects such as plant material 616, plants 606, 608 (e. g. vine stocks of a vineyard), etc. growing on the ground 614 of an agricultural field. Plant material 616 may comprise windrows, weed, etc.

Plant 606 has a stem interpreted as an obstacle (stem) 610 and plant 608 has a stem interpreted as obstacle (stem) 612.

FIG. 6 shows the reference plane divided into regions forming grid 604. The reference plane is at the zero z-coordinate position of the x,y,z coordinate system 602 of the agricultural machine on which the imaging unit 103 is mounted. The reference plane thus extends in the xy plane.

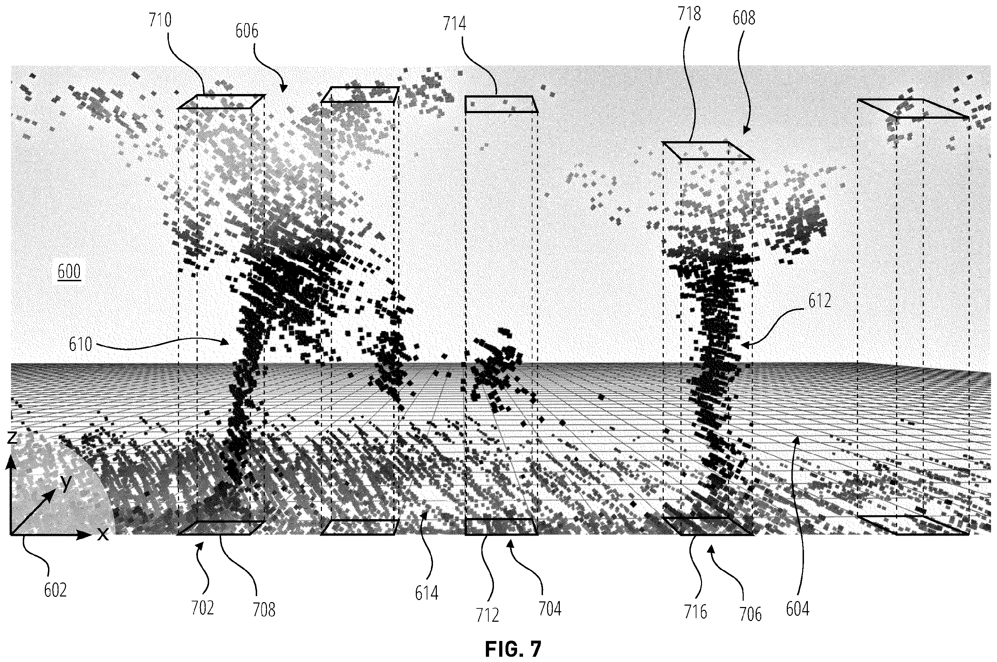

As shown in FIG. 7, the grid defines grid cells (e. g. cells 702, 704, 706) with predefined cell sizes. These cells are the "regions" of the reference plane. The coordinate origin is for example the middle point of the grid along the x-axis and the depth of the grid is determined by the farthest away positive y coordinate of the points in the cloud.

All points of the 3D point cloud 600 located above a specific region are mapped (i.e., assigned) to the specific region. For example, (for example: region 702 covers an area of x- and y- coordinates. All points of the point cloud 600 having the same x- any y-coordinates as covered by the region 702 are assigned to the region 702).
The height condition mentioned above involves, for each region, checking the heights (z-values) of all points assigned to a specific region and determining the lowest point point and a highest point assigned to the specific region. The height (zL) of the lowest point and the height (zH) of highest point are determined. For example, for region 702, the height of the lowest point is represented by height 708 and the height of the highest point is represented by height 710. For region 704, the height of the lowest point is represented by height 712 and the height of the highest point is represented by height 714. For region 706, the height of the lowest point represented by the height 716 and the height of the highest point represented by height 718.

As mentioned above, the difference between the height of highest point and the height of lowest point is determined, e. g. the difference between height 710 and height 708, the difference between height 714 and height 712, and the difference between height 718 and height 716.

This height difference is compared with a threshold value. If the height difference is smaller than the threshold, the region is marked as invalid.

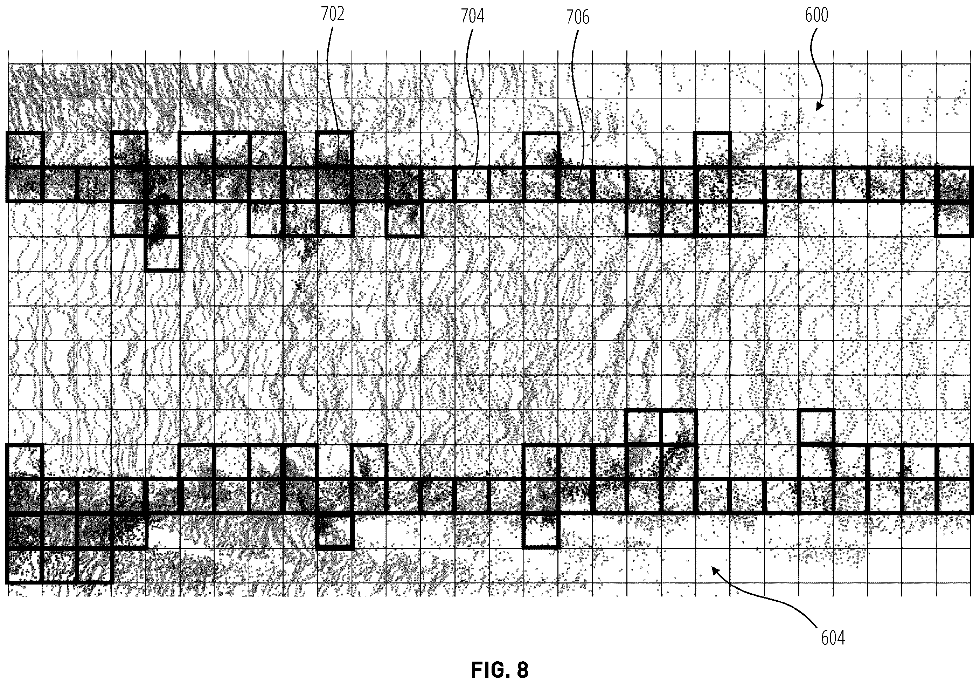

FIG. 8 shows a top-down view of the regions. The regions in bold outline meet the first, height, condition.

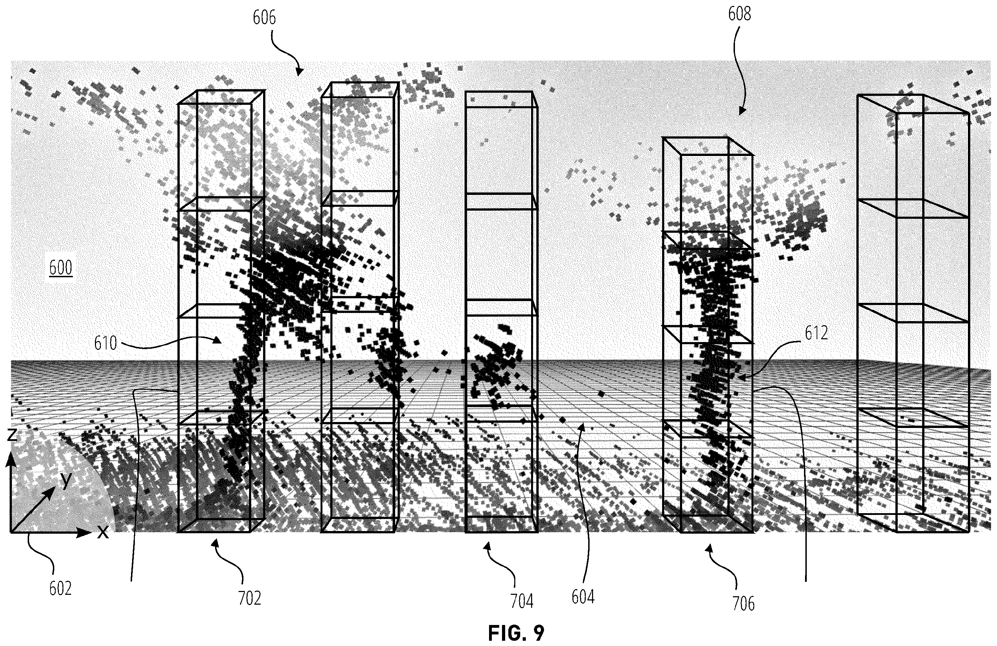

Each region is associated with a volume extending between the lowest height and the highest height above/below the region. FIG. 9 shows five examples of volumes associated with regions of the reference plane, including the two regions where the plants 606, 608 are located.

The second, point distribution, condition involves an analysis of the distribution of solid matter along the height of the volume.

A first (optional) step involves determining if the total number of points mapped to a region is larger than a given threshold value. Thus, the total plant quantity within that volume is determined, if this threshold is not met, the region is marked as invalid.

A second (optional) step involves determining if the total number of points mapped to the region divided by the volume of the region is larger than a threshold value. Thus, the total plant density within that volume is determined. If the threshold is not met, the region is marked as invalid.

For the invalid regions, all mapped points are removed from the point cloud.

For the remaining valid regions (namely the five regions shown in FIG. 9) the vertical volumes are divided into vertical segments of equal size (within each volume). For example, each volume is divided into four segments. Thus, the segments may be different sizes between volumes, but they are the same within each volume. The segments are shown in FIG. 9.

Optionally, for each point mapped to a region of the reference plane, if the height distance to the minimum value is smaller than a threshold value, the point is marked for removal. This provides removal of the ground plane. The ground points thereby do not influence the density calculations (described below). It also assists for example in identifying a precise direction of the trunk. The non-removed points are mapped to one of the vertical segments.

For each vertical segment, a point density is determined by dividing a point count of the segment with the volume of the segment. If the density of the segment is smaller than a threshold value, the whole volume is marked as invalid.

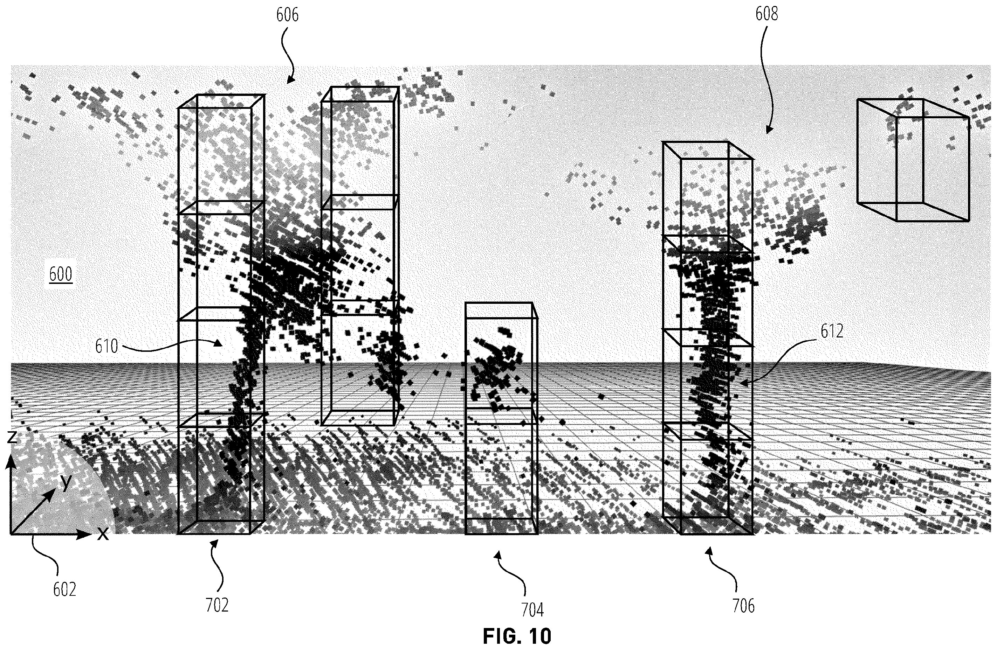

FIG. 10 shows only the segments that meet the point density requirement. Only the volumes extending from regions 702 and 706 meet the second, point density distribution, requirement namely that all four segments meet the point density requirement.

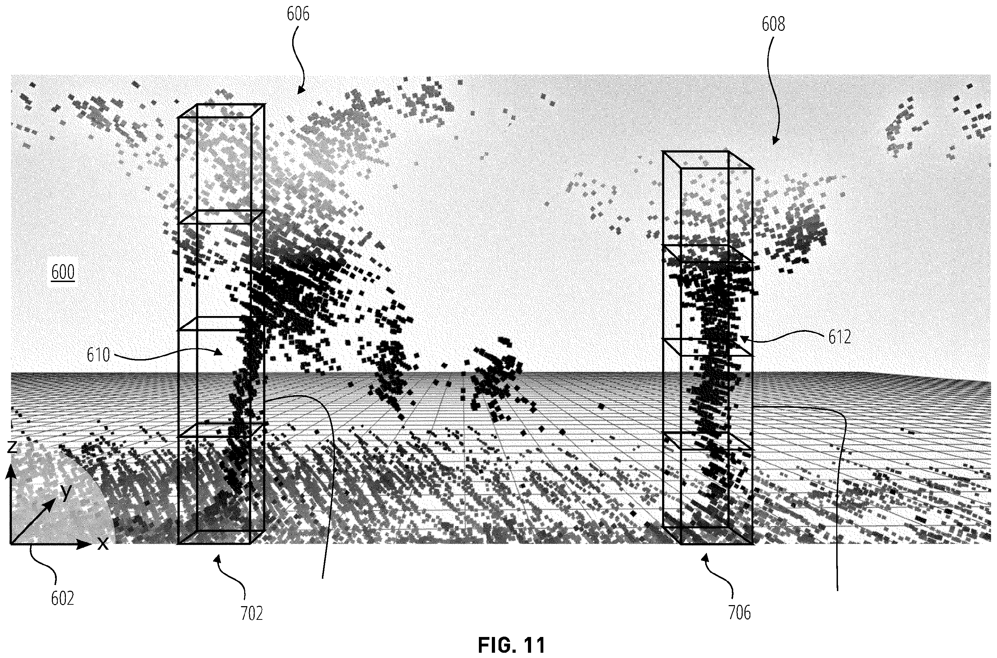

FIG. 11 shows volumes with remaining data points after the points are removed for the regions that did not meet the second, point distribution, requirement.

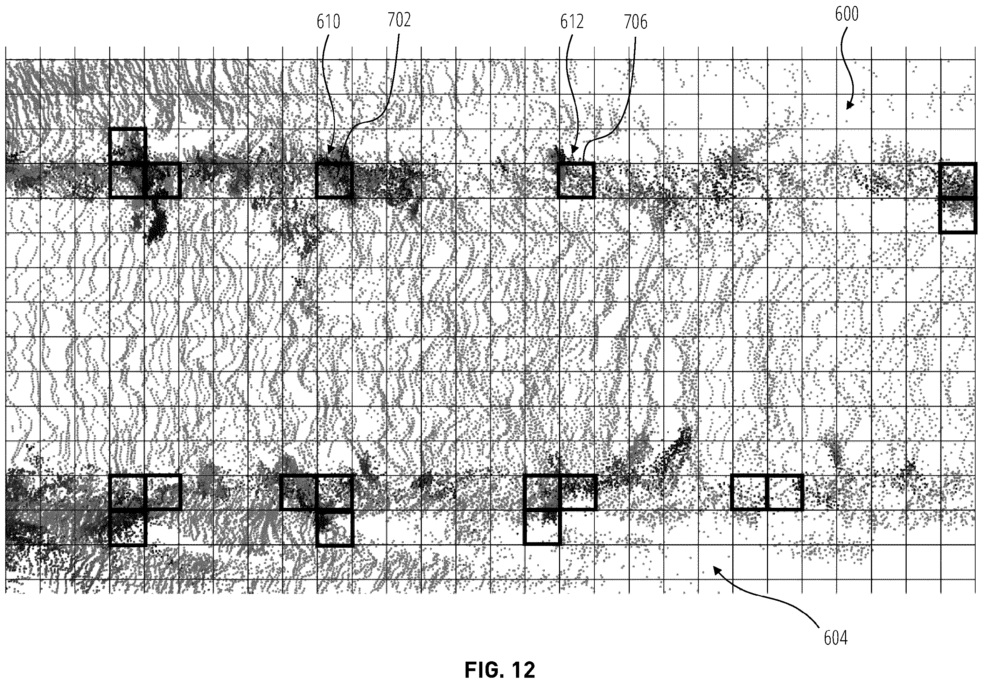

FIG. 12 shows the above ground view of the regions which met both conditions, as the bold regions. Thus, these regions are identified as corresponding to plant locations. All other points may be removed.

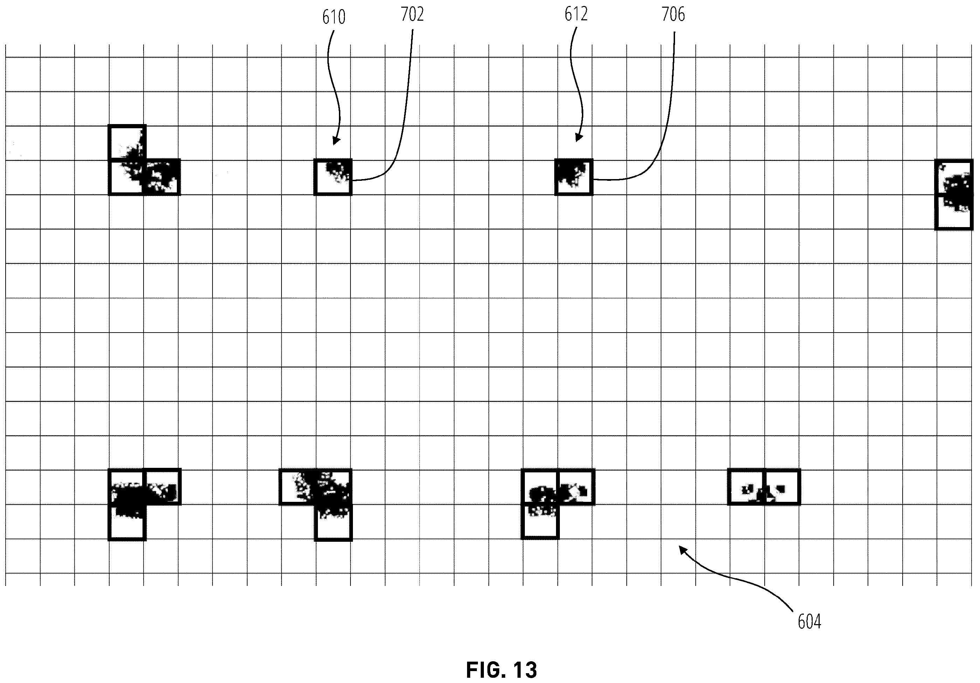

FIG. 13 shows the reference plane after removal of all other points so that only the regions corresponding to plant locations are shown.

The precise trunk locations may then be calculated, for example using a random sample consensus (RANSAC) approach to fit a line through each remaining point cluster. The computed line is used to compute a footing point and an upper point (for this the lower and upper bounds of the corresponding point volume can be used). A protection area can for example be defined around this trunk location.

In this way, a map may be generated, with the identified plant locations (and protection areas) representing mapped obstacles, e. g. obstacle (stem) 610 and obstacle (stem)s 612. The map can be used in various ways, for example to control a weeder to remove weed between the obstacle (stem) 610 and obstacle (stem) 612 and to avoid a collision of the weeder with any obstacle (stem) 610, 612.

FIG. 14 shows how the plant location information may be used to determine a path for the agricultural vehicle to follow, avoiding collision.

From the identified regions (shown in FIG. 14) rows of plant locations are identified. For example, the rows may be spaced with a known spacing, and this may be greater than the spacing between plants along the row, i.e. greater than a spacing between columns when viewing the plant locations as a row-column grid. This is for example the case for vines. Rows of plants may also be identified because the space between plants along the row is less clear than the space between rows, because the plants have been trained along the row direction. This is again the case for vines.

After identifying the rows of plant locations, a path 1402 between the rows of plant locations is determined. This path is for example derived by determining mid points between plant locations of adjacent rows of plant locations. These midpoints are shown as circles in FIG. 14. The path 1402 is then a smoothed line derived from the midpoints.

This path 1402 may then be used to guide an agricultural machine 101 between the plant rows, for example by implementing an automatic steering function. However, in addition to providing guidance along the rows, knowledge of the plant locations may also be used to control ground processing between plants along the rows (rather then between the rows).

For example, a robotic weeding or cutting device may navigate along the rows and also laterally from the rows to the spaces between the plants. Alternatively, the agricultural vehicle 202 may have an implement 204 which can be actuated and deactivated as the vehicle 202 drives along the rows. For example, it may have an extendable cutter or weeder which is deployed when positioned between the plants and is retracted when aligned with the plants.

**LISTING OF DRAWING ELEMENTS**

| | | | |
|---|---|---|---|
| 101 | agricultural machine | 612 | obstacle (stem) |
| 102 | control unit | 614 | ground |
| 103 | imaging unit | 616 | plant material |
| 104 | position determination unit | 702 | cell |
| 105 | sensor | 704 | cell |
| 106 | sensor | 706 | cell |
| 107 | sensor | 708 | height |
| 301 | I/O interface | 710 | height |
| 302 | controller | 712 | height |
| 303 | memory | 714 | height |
| 401 | field of view | 716 | height |
| 402 | lens | 718 | height |
| 403 | filter | 1402 | path |
| 404 | detector | | |
| 405 | processing circuitry | | |
| 600 | point cloud | | |
| 602 | coordinate system | | |
| 604 | grid | | |
| 606 | plant | | |
| 608 | plant | | |
| 610 | obstacle (stem) | | |

## Claims

1. A method of identifying plant locations within a terrain, comprising:
(S101) receiving a 3D point cloud (600) representing those points, in a 3D volume extending above the terrain, where solid matter is present;
(S103) identifying those regions of a reference plane of said 3D volume for which solid matter aligned in a height direction with said reference plane region meets a first, height, condition;
(S104) defining a volume (702,704,706) for each identified region, the volume extending to the maximum height at which a point of the point cloud is present above said identified region;
(S105) identifying those volumes which meet a second, point distribution, condition; and
(S110) outputting an identification of the reference plane regions of the identified volumes as plant locations.

2. The method of claim 1, wherein the 3D point cloud is received from an imaging unit (103) mounted on an agricultural machine (101) and the method comprises:
(S102) defining said reference plane as a reference plane which is fixed relative to a coordinate system of the agricultural machine (101); and
(S102) dividing the reference plane into a grid (604) of said regions.

3. The method of claim 1 or 2, wherein the first, height, condition is that the distance between the lowest (708,712,716) and highest (710,714,718) points at which solid matter is present exceeds a height threshold.

4. The method of any one of claims 1 to 3, wherein the defined volume for each identified region extends from a minimum height at which a point of the point cloud is present to the maximum height at which a point of the point cloud is present.

5. The method of any one of claims 1 to 4, wherein identifying those volumes which meet a second, point distribution, condition comprises:
determining at least one point density within each volume; and
identifying the volumes for which the determined at least one point density meet a point density criterion.

6. The method of claim 5, wherein identifying those volumes which meet a second, point distribution, condition comprises:
dividing each volume into a set of segments in the height direction;
determining a point density within each segment; and
identifying the volumes for which every segment meets a minimum point density threshold.

7. The method of any one of claims 1 to 6, comprising using a Lidar sensor (103) mounted on an agricultural machine (101) to produce the 3D point cloud and performing position tracking of the agricultural machine (101).

8. The method of any one of claims 1 to 7, comprising:
identifying rows of plant locations;
determining (1402) a path between the rows of plant locations.

9. The method of claim 8, comprising:
determining mid points between plant locations of adjacent rows of plant locations; and
determining the path (1402) as a smoothed line derived from the midpoints.

10. A method of controlling a ground or plant processing machine, comprising:
identifying plant locations using the method of any one of claims 1 to 9;
using the identified plant locations to control, or assist the control of, a ground or plant processing machine.

11. A system for identifying plant locations within a terrain, comprising:
an imaging unit (103) for generating a 3D point cloud representing those points in a 3D volume extending above the terrain where solid matter is present; and
a controller (302) for processing the 3D point cloud, wherein the controller configured to:
identify regions of a reference plane of said 3D volume for which solid matter matter aligned in a height direction with said reference plane region meets a first, height, condition;
define a volume for each identified region extending to the maximum height at which a point of the point cloud is present above said identified region;
identify those volumes which meet a second, point distribution, condition; and
output an identification of the reference plane regions of the identified volumes as plant locations.

12. The system of claim 11, wherein the the imaging unit (103) is mounted on an agricultural machine (101) and the controller (302) is further configured to:
define, as said reference plane, a reference plane which is fixed relative to a coordinate system of the agricultural machine (101); and
divide the reference plane into a grid (604) of said regions.

13. The system of claim 11 or 12, wherein the first height condition is that the distance between the lowest and highest points at which solid matter is present exceeds a height threshold.

14. The system of any one of claims 11 to 13, wherein the defined volume for each identified region extends from a minimum height at which a point of the point cloud is present to the maximum height at which a point of the point cloud is present.

15. The system of any one of claims 11 to 14, wherein the controller is configured to identify those volumes which meet a second, point distribution, condition by:
determining a point density within each volume; and
identifying the volumes for which the point density meets a minimum point density threshold.

16. The system of claim 15, wherein the controller is configured to identify those volumes which meet a second, point distribution, condition by:
dividing each volume into a set of vertical segments of equal size;
determining a point density within each segment; and
identifying the volumes for which every segment meets a minimum point density threshold.
